(19) **Europäisches Patentamt**
European Patent Office
Office européen des brevets

(11) **EP 2 204 618 A2**

(12) **EUROPÄISCHE PATENTANMELDUNG**

(43) Veröffentlichungstag:
**07.07.2010 Patentblatt 2010/27**

(51) Int Cl.:
*F24D 11/00* (2006.01)     *F24H 1/18* (2006.01)

(21) Anmeldenummer: **09015455.0**

(22) Anmeldetag: **15.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **02.01.2009   AT 32009**

(71) Anmelder: **Vaillant GmbH**
**42859 Remscheid (DE)**

(72) Erfinder:
• **Müller, Dieter**
  **42655 Solingen (DE)**
• **Benabdelkarim, Mohamed**
  **44000 Nantes (FR)**

(74) Vertreter: **Hocker, Thomas**
**Vaillant GmbH**
**Berghauser Strasse 40**
**42859 Remscheid (DE)**

(54)     **Heiz- oder Brauchwasserwärmespeicher**

(57)     Zweigeteilter Wärmespeicher (1) für Heiz- und / oder Brauchwasser, wobei der Wärmespeicher (1) über einen inneren Behälter (11) zur Aufnahme des Heiz- und / oder Brauchwassers verfügt, welcher zumindest zu einem großen Teil von einem Mantel (2), der zumindest zu einem großen Teil mit Latentwärmespeichermaterial gefüllt ist, umgeben ist, **dadurch gekennzeichnet, dass** der Mantel (2) lediglich den oberen und optional den mittleren Bereich des inneren Behälters (11) umgibt und vorzugsweise das untere Drittel nicht von dem Mantel (2) umgeben ist.

Fig. 1

EP 2 204 618 A2

**Beschreibung**

Die Erfindung bezieht sich auf einen Heiz- oder Brauchwasserwärmespeicher.

Heiz- und Brauchwasserwärmespeicher werden in der Regel von brennstoffbetriebenen Heizungen beheizt und bevorraten auf einem bestimmten Temperaturniveau Wasser. Häufig werden die Speicher auch solarthermisch erwärmt oder zumindest vorgewärmt.

Bei Warmwasserspeichern besteht das Problem, dass auf der einen Seite die Temperatur eine bestimmte Temperatur nicht übersteigen soll, um die Abstrahlverluste zu limitieren. Um Wärme auf einem bestimmten Niveau entnehmen zu können, ist eine bestimmte Mindesttemperatur in einem Teilbereich notwendig. Andererseits muss die Temperatur zumindest temporär oberhalb 55°C gehalten werden, um Legionellenbildung zu vermeiden. Hieraus resultiert ein relativ kleiner Temperaturbereich, in dem sich die Speichertemperatur aufhalten darf.

Aus dem Stand der Technik sind Wärmespeicher bekannt, welche sowohl Wasser, als auch Latentwärmespeichermaterial beinhalten. Latentwärmespeichermaterialien werden auch PCM (Phase Change Materials) genannt. Der Vorteil der Latentwärmespeichermaterialien liegt in der Nutzung der latenten Wärme während des Phasenwechsels. Hierdurch wird erreicht, dass relativ viel Wärme gespeichert werden kann ohne dabei das Temperaturniveau wesentlich zu verändern.

Reine Latentwärmespeicher haben den Nachteil, dass sie aufgrund der relativ geringen Wärmeleitung des PCMs bei Brauchwasserzapfung im Vergleich zu reinen Wasserspeichern relativ träge sind und kaum ausreichend Wärme zur Verfügung gestellt werden kann oder die benötigten Übertragungsflächen unverhältnismäßig groß und die maximalen Stecken der Latentspeichermaterialpartikel zu der nächsten Übertragungsfläche unverhältnismäßig klein sein müssen.

Die EP 1 482 254 A1 zeigt einen Latentwärmespeicher, welcher mit einer Brennstoffzelle verbunden ist, um bei nahezu konstanter Temperatur Wärme speichern zu können.

DE 298 21 270 U1 zeigt einen Wärmespeicher, bei dem ein Latentwärmespeichervolumen von einem Wasservolumen umgeben ist. Als Wärmequelle dient eine Heizungsanlage mit Wasserzulauf und Wasserablauf.

Aufgabe der vorliegenden Erfindung ist es, einen kombinierten Wärmespeicher mit einem Latentwärmespeichervolumen und einem Wasservolumen zu schaffen, welcher sich durch optimierte Eigenschaften auszeichnet.

Erfindungsgemäß wird dies gemäß Anspruch 1 dadurch gelöst, dass der Wärmespeicher über einen inneren Behälter zur Aufnahme des Heiz- oder Brauchwassers verfügt, welcher zumindest zu einem großen Teil von einem Mantel, der mit Latentwärmespeichermaterial gefüllt ist, umgeben ist. Da Latentwärmespeichermaterialien die Wärme schlechter leiten als Wasser, werden hierdurch die Wärmeverluste an die Umgebung im Vergleich zum Stand der Technik verringert. Die Wärmeleitfähigkeit von festem Paraffin liegt bei lediglich 0,18 W/(mK). Der mit Latentwärmespeichermaterial gefüllte Mantel ragt nur über den oberen Bereich des inneren Behälters, in vorteilhafter Weise die oberen 2/3 des inneren Behälters. Da in der Regel bei einem Wärmespeicher zur Speicherladung unten Wasser entnommen und oben erhitzt zugeführt wird, wird hierdurch erreicht, dass das unterste Drittel leichter abkühlen kann und somit das Wasser eher in einer externen Wärmequelle wie zum Beispiel einem Solarabsorber erhitzt werden kann.

Vorteilhafte Ausgestaltungen werden durch die abhängigen Ansprüche geschützt.

Bei einer Verbindung des inneren Behälters mit einem Solarkollektor kann auch bei geringer Sonneneinstrahlung Wärme auf nahezu konstantem Niveau eingebracht werden, da Wärme vom inneren Behälter auf den äußeren übertragen wird und ein großer Teil der Gesamtwärmekapazität in Form der Schmelzwärme aufgenommen wird. Liegt die Speichertemperatur unterhalb der Schmelztemperatur des Latentwärmespeichermaterials, so dient dieses auch als Dämmschicht gegen Wärmeverluste. Nimmt die Sonneneinstrahlung zu, so wird nach dem Erreichen der Schmelztemperatur des Latentwärmespeichermaterials viel Energie in den Speicher eingebracht, ohne das Temperaturniveau dabei wesentlich zu erhöhen.

Der innere Behälter kann als Schichtenspeicher betrieben werden. Das Betreiben des Speichers als Schichtenspeicher birgt den Vorteil, dass über die gesamte Höhe des mit Latentwärmespeichermaterial gefüllten Mantels beim Laden beziehungsweise Entladen kontinuierlich ein Phasenwechsel stattfinden kann und somit in einem sehr großen Betriebsbereich der Phasenübergang erfolgt, was angesichts der relativ schlechten Wärmeleitung des festen Latentwärmespeichermaterials eine Nutzung der Latentwärme begünstigt.

Der Solarkollektor ist in einer Ausführungsform gemäß Anspruch 4 mit einem im Wesentlichen wendelförmigen Wärmeaustauscher im Inneren des inneren Behälters verbunden.

Ist der mit Latentwärmespeichermaterialien gefüllte Mantel mit einem paraffinhaltigen Medium, bestehend aus einem Fluid aus Wasser oder Wasserglykol mit mikroverkapseltem Paraffin gefüllt, so ergibt sich der Vorteil, dass der Wärmeübergang zwischen dem inneren und äußeren Behälter erhöht wird. In diesem Fall kann der äußere Behälter jedoch keine Funktion als Wärmedämmung übernehmen; diese muss dann von der Wärmedämmung übernommen werden.

Ist der mit Latentwärmespeichermaterial gefüllte Mantel vertikal in Teilbereiche mit unterschiedlichen Schmelzpunkten unterteilt, wobei vorzugsweise der Schmelzpunkt von oben nach unten abnimmt, so kann über einen großen Temperaturbereich Latentwärme genutzt werden.

Gemäß den Merkmalen des Anspruchs 8 sind der innere Behälter und der Latentwärmespeichermaterialien enthaltende Mantel von einer gemeinsamen Wärmedämmung umschlossen, um die Wärmeverluste weiter zu mindern.

Ist dem Wärmespeicher eine Vorrichtung zur Nacherhitzung des Heiz- und / oder Brauchwassers nachgeschaltet, so kann auch Wärme unterhalb des Heiz- oder Brauchwasserniveaus sinnvoll gespeichert werden.

In einer vorteilhaften Ausgestaltung der Erfindung befindet sich das Latentwärmespeichermaterial in Beuteln, die an der Innen- oder Außenseite des Behälters angeordnet sind. Die Beutel können aus Kunststoff- oder Metallfolien hergestellt sein. Die Anbringung der Beutel an der Außenseite birgt den Vorteil, dass bei Undichtigkeiten kein Latentspeichermaterial in das Wasser des Wärmespeichers gelangen kann. Sofern die Beutel sich auf der Außenseite des Behälters befinden, kann mittels Wärmeleitpaste zwischen den Beuteln und der Wand des Behälters der Wärmeübergang verbessert werden. Luftblasen zwischen den Beuteln und dem Behälter sind zu vermeiden, da diese den Wärmeübergang massiv beeinträchtigen. Befinden sich die Beutel auf der Innenseite des Behälters, so gewährleistet die direkte Berührung mit dem Wasser im Speicherbehälter einen guten Wärmeübergang.

Die Erfindung wird nun anhand der Zeichnungen detailliert erläutert. Hierbei zeigen:

Figur 1 einen erfindungsgemäßen Wärmespeicher mit einem Solarkollektor,

Figur 2 den Wärmespeicher von oben,

Figur 3 eine Abwandlung von Figur 1 mit einem weiteren Fluidkreislauf sowie

Figur 4 eine Abwandlung von Figur 1 mit zweigeteiltem Latentwärmespeicher.

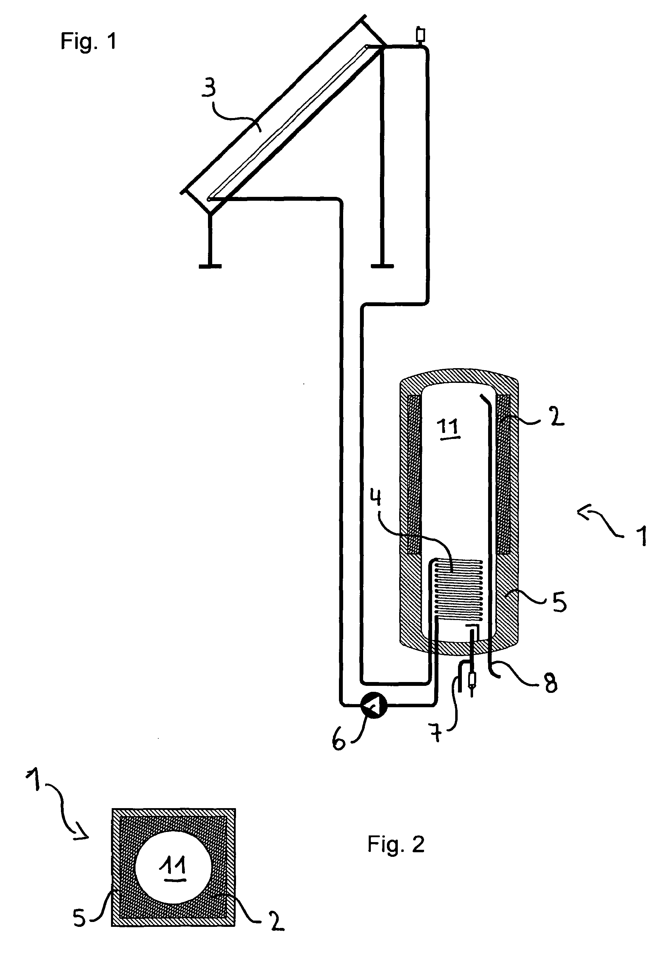

Figur 1 und Figur 2 zeigen einen zweigeteilten Wärmespeicher 1 für Heiz- und / oder Brauchwasser mit einem inneren Behälter 11 zur Aufnahme des Heiz- und / oder Brauchwassers sowie einem Mantel 2, der mit Latentwärmespeichermaterial gefüllt ist. Der Mantel 2 kann durch mit Latentwärmespeichermaterial gefüllte Beutel aus Kunststoff- oder Metallfolie gebildet werden. Der Wärmeübergang zwischen dem Mantel 2 und dem Behälter 11 kann durch Wärmeleitpaste verbessert werden. Der Mantel 2 erstreckt sich über die oberen zwei Drittel der Höhe des inneren Behälters 11. Der innere Behälter 11, der vorzugsweise aus Kupfer oder Edelstahl hergestellt ist, um eine gute Wärmeleitung zum Mantel 2 zu gewährleisten, und der Mantel 2 sind gemeinsam von einer Wärmedämmung 5 umschlossen. Ein Solarkollektor 3 ist über einen wendelförmigen Wärmeaustauscher 4 mit dem Inneren des inneren Behälters 11 verbunden. In den unteren Bereich des inneren Behälters 11 führt eine Kaltwassereinlaufleitung 7 hinein. Aus dem oberen Bereich des inneren Behälters 11 führt eine Warmwasserzapfleitung 8 heraus.

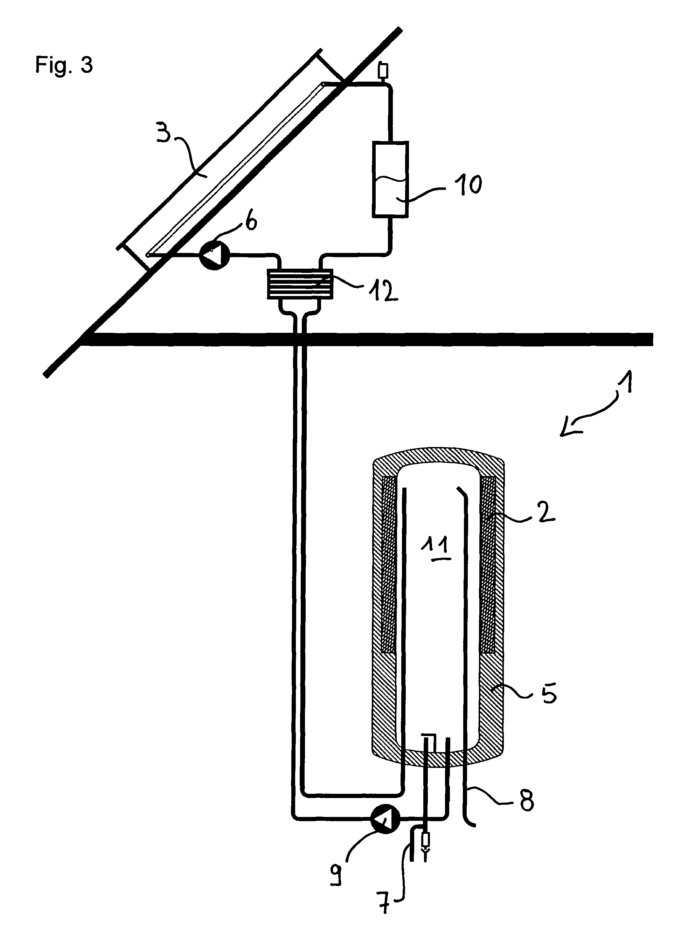

Bei einer Vorrichtung gemäß Figur 3 befinden sich zwischen dem Solarkollektor 3 und dem Wärmespeicher 1 ein Solarkreislauf mit Solarpumpe 6 und Drainback-Speicher 10 und ein Wärmetauscherkreislauf mit Umwälzpumpe 9, der in den oberen Bereich und aus dem unteren Bereich des inneren Behälters 11 führt. Die beiden Kreisläufe sind über einen Plattenwärmetauscher 12 miteinander gekoppelt. Statt eines Plattenwärmetauschers kann auch ein anderer Wärmetauscher Verwendung finden. Der innere Behälter 11 kann somit als Schichtladespeicher betrieben werden. Bei einem Schichtladespeicher wird kaltes Wasser unten in den Speicherbehälter eingeleitet und warmes Wasser oben aus dem Behälter entzogen. Zur Speicherladung wird kaltes Wasser unten dem Behälter 11 entnommen, erhitzt und dem Behälter 11 oben wieder zugeführt. Hierdurch wird eine Temperaturschichtung erreicht. Durch den Drainback-Speicher 10 im Solarkreislauf ist es möglich, zum Beispiel bei Frost den Solarkollektor 3 zu entleeren.

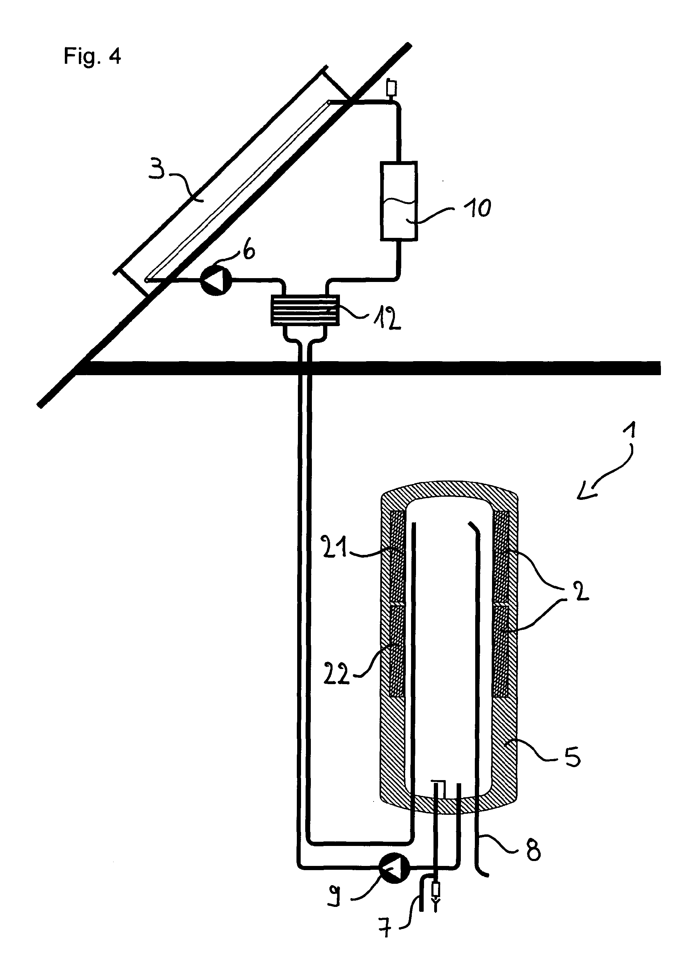

Figur 4 zeigt eine Variante der Vorrichtung gemäß Figur 3. Der mit Latentwärmespeichermaterial gefüllte Mantel 2 ist vertikal in zwei übereinander angeordnete Teilstücke 21, 22 unterteilt. Diese Teilstücke 21, 22 sind mit Latentwärmespeichermaterial mit unterschiedlichen Schmelzpunkten gefüllt, wobei das obere Teilstück einen höheren Schmelzpunkt aufweist. Das untere Drittel des inneren Behälters 11 ist nicht von Latentwärmespeichermaterial umgeben.

Die erfindungsgemäße Vorrichtung ermöglicht es, die sensible Wärme des Wassers für einen raschen Wärmeübergang mit der Latentwärme des Latentwärmespeichers für große Energiedichten zu kombinieren.

Allgemein gilt für die Speicherung sensibler Wärme:

$$Q = m \cdot c_p \cdot \Delta T$$

Hierbei sind Q die auf- oder abgegebene Wärme, m die erwärmte oder abgekühlte Masse, $c_p$ die spezifische Wärmekapazität und $\Delta T$ die Temperaturdifferenz.

Bei einem erfindungsgemäßen Wärmespeicher ergibt sich die gespeicherte Wärmemenge gemäß der Formel

$$Q = m_{H_2O} \cdot c_{p,H_2O} \cdot \Delta T + m_{PCM} \cdot c_{p,PCM} \cdot \Delta T + m_{PCM} \cdot q_{S,PCM}$$

Hierbei stehen die Indizes $H_2O$ für das Wasser im Speicher und PCM für das Latentwärmespeichermaterial. Die spezifische Schmelzwärme wird mit $q_s$ bezeichnet. Die Schmelzwärme wird beim Unterschreiten der Schmelztemperatur frei beziehungsweise diese muss beim Überschreiten der Schmelztemperatur eingebracht werden.

Als Latentwärmespeichermedien sind neben organischen Materialien wie zum Beispiel Paraffin auch anorganische Materialien, insbesondere Salzhydrate oder Salzhydratbeziehungsweise Salzgemische, zur Aufnahme der Phasenumwandlungsenergie geeignet. So können beispielsweise Gemische aus Magnesiumnitrat mit Nitraten oder Alkali- oder Erdalkalimetallen verwendet werden. Auch Salzgemische auf der Basis von Magnesiumnitrat und Lithiumnitrat (Mg $(NO_3)_2$ 6 $H_2O$ und $LiNO_3$, z.B. 87-92 % Mg $(NO_3)_2$ 6 $H_2O$ und 8-13 % $LiNO_3$ Schmelztemperatur 70°C +/- 2 K, Schmelzwärme 54,32 Wh/kg) sind hierzu geeignet.

Paraffin ($C_nH_{2n+2}$) stellt eine Sammelbezeichnung für gesättigte Kohlenwasserstoffgemische dar, die hauptsächlich aus Erdöl gewonnen werden. Paraffine, die auch als Wachse bezeichnet werden, sind organische Stoffe, die nach der Raffination geruchlos, geschmacklos und ungiftig sind. Es wird zwischen Normalparaffine und Isoparaffine unterschieden. Normalparaffine sind einfache, lang gestreckte Ketten. Isoparaffine haben von einer langen Grundkette verzweigende Äste. Für wärmetechnische Anwendungen kommen überwiegend Normalparaffine zum Einsatz. Die Schmelztemperatur der Paraffine liegt zwischen 30 bis 90°C bei einer Zahl n zwischen 18 und 50. Mit steigender Molekülkettenlänge bzw. steigender Molmasse nimmt die Schmelztemperatur des Materials stetig zu. Paraffine sind für thermische Anwendungen gut geeignet. Der Vorteil der Paraffine liegt in der Nutzung der latenten Wärme während des Phasenwechsels. Ein geringerer Teil wird als sensible Wärme gespeichert. Die spezifische Wärmekapazität von Wärmeparaffin liegt bei etwa 2,1 kJ/(kg·K), die Schmelzenthalpie bei 180 bis 230 kJ/kg. Hierdurch sind Paraffine bestens zur Wärmespeicherung geeignet. Paraffin speichert beim Phasenwechsel etwa soviel Wärme wie die gleiche Menge Wasser bei einer Temperaturdifferenz von 40 K. Demzufolge werden Paraffine vorzugsweise im Bereich ihrer Schmelztemperatur eingesetzt, da sie in diesem Bereich viel Wärme speichern können. Es ist jedoch darauf zu achten, dass beim Phasenübergang fest (Dichte 0,8 bis 0,9 kg/l) zu flüssig (Dichte 0,75 bis 0,85 kg/l) das Volumen um etwa 10 % zunimmt, so dass bei mit Paraffinen gefüllten Wärmespeichern eine Kompensationsvorrichtung vorgesehen sein sollte.

Eine Sonderform stellen PCS (Phase Change Slurries) dar. Hierbei wird Paraffin in kleinen Kügelchen (Durchmesser 1 bis 20 $\mu$m) von einer Hülle (Wandstärke deutlich kleiner 200 nm) umschlossen (Mikroverkapselung). Diese Kügelchen werden in Wasser gegeben, wodurch eine Emulsion aus Wasser und Kügelchen mit PCM-Eigenschaften, d.h. einer hohen Energieaufnahmemöglichkeit in einem kleinen Temperaturbereich, entsteht. Durch geeignete Wahl des PCM kann die Schmelztemperatur des PCS individuell in einem Bereich vorzugsweise zwischen 6 und 65°C eingestellt werden.

Einen Unterschied des PCS gegenüber PCM stellt die Tatsache dar, dass das Paraffin beim PCS durch die Kügelchen weiterhin mobil bleibt. Bei konventionellem Paraffin findet die Erstarrung zunächst an den Wärmeübertragerflächen des kühlenden Mediums statt. Das Paraffin lagert sich am Wärmeübertrager ab und bildet eine Dämmschicht, so dass die weitere Wärmeübertragung deutlich erschwert wird. Die Wärmeleitfähigkeit von festem Paraffin liegt bei lediglich 0,18 W/(mK). Demgegenüber erstarrt bei PCS lediglich das Paraffin in den Kügelchen. Die Kügelchen können von der Wärmeübertragerfläche weg transportiert werden und somit die Wärmeübertragung auf das restliche PCS erleichtern.

Am folgenden Beispiel soll die Aufnahmefähigkeit eines erfindungsgemäßen Speichers dargestellt werden. Der innere Behälter soll ein Wasservolumen von 60 l beinhalten, was einer Masse von 60 kg entspricht. Die spezifische Wärmekapazität von Wasser beträgt 4,189 kJ/(kg K). Der Latentspeicher hat ein Volumen von 91,3 l bei einer Dichte von 0,9 kg/l, einer spezifischen Wärmekapazität von 2,1 kJ/(kg K) und einer Schmelzwärme von 181 kJ/kg. Die Masse beträgt damit m = p * V = 82 kg.

Strömt Wasser bei 10°C ein und wird auf 60°C erhitzt, so wird folgende Menge Wärme Q aufgenommen:

$$Q = m_{H_2O} \cdot c_{p,H_2O} \cdot \Delta T + m_{PCM} \cdot c_{p,PCM} \cdot \Delta T + m_{PCM} \cdot q_{S,PCM}$$

$$Q = \left( 60\,kg \cdot 4{,}189\,\frac{kJ}{kg\,K} + 91{,}3\,kg \cdot 2{,}1\,\frac{kJ}{kgK} \right) \cdot \left( 333\,K - 283\,K \right) + 91{,}3\,kg \cdot 181\,\frac{kJ}{kg}$$

$$Q = \left( 251{,}34\,\frac{kJ}{K} + 191{,}73\,\frac{kJ}{K} \right) \cdot 50\,K + 16525{,}3\,kJ$$

$$Q = 443{,}07\,\frac{kJ}{K} \cdot 50\,K + 16525{,}3\,kJ$$

$$Q = 22153{,}5\,kJ + 16525{,}3\,kJ$$

$$Q = 38678{,}8\,kJ = 10{,}74\,kWh$$

In der Praxis bleibt häufig noch ein Teil des Latentwärmespeichers ungeschmolzen. Geht man davon aus, dass nur 80 % des Latentwärmespeichers geschmolzen werden, so würde dies eine Reduzierung der aufnehmbaren Wärmemenge um 0,918 kWh bedeuten.

Bei einer Speicherentladung wird der Speicher meist nur bis zur minimal Brauch- oder Heizwassertemperatur entladen; dementsprechend wird der Speicher nur mit einer Temperaturdifferenz von etwa 20 K betrieben. Hieraus ergibt sich für oben genanntes Rechenbeispiel, dass der Speicher für den Betrieb nur 2,5 kWh sensible Wärme, jedoch 4,6 kWh latente Wärme speichern kann.

Bei der Speicherladung wird Wärme vom Solarkollektor 3 über den wendelförmigen Wärmeaustauscher 4 in das Wasser im inneren Behälter 11 übertragen, wodurch dieses erhitzt wird. Gleichzeitig wird Wärme vom inneren Behälter 11 auf den mit Latentwärmespeichermaterial gefüllten Mantel 2 übertragen, wodurch auch dieses sich erwärmt. Solange das Latentwärmespeichermaterial fest ist, geschieht der Wärmeübergang nur langsam, wodurch bei der Speicherladung das Latentwärmespeichermaterial stets etwas kälter als das Wasser im inneren Behälter 11 ist. Gleichzeitig dämmt das Latentwärmespeichermaterial aufgrund der langsamen Wärmeübertragung gegenüber der Umgebung. Erreicht das Latentwärmespeichermaterial seine Schmelztemperaur, so wird Latentwärmespeichermaterial verflüssigt und somit Schmelzwärme aufgenommen. Wird warmes Wasser über die Warmwasserzapfleitung 8 aus dem oberen Bereich des inneren Behälters 11 entnommen, so strömt kaltes Wasser über die Kaltwassereinlaufleitung 7 nach. Dieses kalte Wasser kann einerseits über den wendelförmigen Wärmeaustauscher 4 und andererseits durch Wärmeabgabe des Latentwärmespeichermaterials erwärmt werden. Unterschreitet das Latentwärmespeichermaterial hierbei seine Schmelztemperatur, so wird Schmelzwärme abgegeben.

Durch diesen zweigeteilten Wärmespeicher 1 ist es möglich, fast permanent Wärme des Solarkollektors 3 einzubringen. Bei konventionellen Solarspeichern muss die Solarpumpe abgeschaltet werden, wenn die Solltemperatur erreicht ist. Durch die Aufnahme von Schmelzwärme kann bei einem erfindungsgemäßen Solarkollektor im Bereich des Schmelzpunktes zusätzlich Wärme aufgenommen werden. Somit kann deutlich mehr Sonnenenergie genutzt werden.

Bei einer Vorrichtung gemäß Figur 3 ergibt sich der Vorteil, dass unabhängig vom Gesamtladezustand des Wärmespeichers 1 leicht eine gewisse Menge Wasser auf hohem Temperaturniveaus bevorratet werden kann. Bei der Speicherladung wird Wärme vom Solarkollektor 3 über den Plattenwärmeaustauscher 12 in den oberen Bereich des inneren Behälters 11 eingebracht. Ein Teil der Wärme wird auf den Mantel 2 übertragen. Heißes nachströmendes Wasser drückt das abgekühlte Wasser nach unten, so dass der obere Bereich des inneren Behälters 11 stets heißes Wasser bevorratet. Wird über die Warmwasserzapfleitung 8 Wasser entnommen, so befindet sich dieses zunächst auf hohem thermischem Niveau. Bei kleinen Zapfmengen ist somit ein hohes Temperaturniveau gewährleistet. Erst bei größeren Zapfmengen macht sich die Temperaturschichtung bemerkbar, so dass die Temperatur des gezapften Wassers deutlich abnimmt. Durch die Wasserzapfung wird der innere Behälter 11 abgekühlt. Aufgrund der so entstehenden Temperaturdifferenz wird dem Mantel 2 Wärme entzogen und dem inneren Behälter 11 zugeführt, so dass dieser nicht nur durch den Solarkollektor 3, sondern auch den Mantel 2 erwärmt wird. Wird der Mantel hierbei unter die Schmelztemperatur des Latentwärmespeichermaterials abgekühlt, so wird Kristallisationsenergie frei.

Bei einer Vorrichtung gemäß Figur 4 wird der Tatsache, dass bei einem Schichtenspeicher die Temperatur von oben nach unten abnimmt, Rechnung getragen. Während der obere Teilbereich 21 des Mantels 2 einen Schmelzpunkt von 65°C aufweist, beträgt der Schmelzpunkt des unteren Teilbereichs 22 55°C. Somit kann in zwei Temperaturbereichen Kristallisationsenergie gespeichert beziehungsweise freigesetzt werden, was die Nutzung der Vorteile des Latentwärmespeichers bei unterschiedlichen Betriebstemperaturen und -zuständen ermöglicht. So wird bei hoher Sonneneinstrahlung ein hoher Schmelzpunkt benötigt und bei geringerer Sonneneinstrahlung ein niedrigerer. Es ist eine weitere Unterteilung in mehr als zwei Teilbereiche möglich, um diesen Effekt noch effizienter zu nutzen.

Da zugleich der untere Bereich des inneren Behälters 11 nicht von Latentwärmespeichermaterial umgeben ist, wird dieser Bereich bei einer Temperaturabsenkung auch nicht durch Latentwärmespeichermaterial warm gehalten. Gerade bei niedrigen Außentemperaturen und geringer Sonneneinstrahlung ist dies vorteilhaft, da dann relativ kaltes Wasser im Schichtenspeicher bevorratet wird. Dieses relativ kühle Wasser kann dann dennoch bei verhältnismäßig niedriger Temperatur des Solarkollektors 3 Wärme aufnehmen. Wäre der untere Bereich des inneren Behälters 11 von Latentwärmespeichermaterial umgeben ist, so könnte in ungünstigen Fällen bei relativ kaltem Solarkollektor 3 Wärme aus dem Latentwärmespeichermaterial auf das Wasser im unteren Bereich des Schichtenspeichers übertragen werden, von wo die Wärme über den Plattenwärmetauscher 12 auf den Solarkollektors 3 übertragen und letztendlich an die Umgebung abgegeben würde.

Der erfindungsgemäße Wärmespeicher 1 ermöglicht somit bedeutend längere Nutzungszeiten für die Einbringung von Sonnenenergie und erhöht somit deren Nutzung.

## Patentansprüche

1. Zweigeteilter Wärmespeicher (1) für Heiz- und / oder Brauchwasser, wobei der Wärmespeicher (1) über einen inneren Behälter (11) zur Aufnahme des Heiz- und / oder Brauchwassers verfügt, welcher zumindest zu einem großen Teil von einem Mantel (2), der zumindest zu einem großen Teil mit Latentwärmespeichermaterial gefüllt ist, umgeben ist, **dadurch gekennzeichnet, dass** der Mantel (2) lediglich den oberen und optional den mittleren Bereich des inneren Behälters (11) umgibt und vorzugsweise das untere Drittel nicht von dem Mantel (2) umgeben ist.

2. Wärmespeicher (1) nach Anspruch 1, **dadurch gekennzeichnet, dass** der innere Behälter (11) über einen Wärmetauscher (12) mit einem Solarkollektor (3) verbunden ist.

3. Wärmespeicher (1) nach Anspruch 2, **dadurch gekennzeichnet, dass** der innere Behälter (11) als Schichtladespeicher mit Kaltwassereinlaufleitung (7) im unteren Bereich des inneren Behälters (11) und Warmwasserzapfleitung (8) aus dem oberen Bereich des inneren Behälters (11) angeschlossen ist, wobei eine Leitung aus dem unteren Bereich des inneren Behälters (11) zu der Primärseite eines Wärmetauschers (12), vorzugsweise Plattenwärmetauschers und eine weitere Leitung von dieser Primärseite des Wärmetauschers (12) zurück in den oberen Bereich des inneren Behälters (11) führt und die Sekundärseite des Plattenwärmetauschers (12) mit einer Wärmequelle, vorzugsweise einem Solarkollektor (3), verbunden ist.

4. Wärmespeicher (1) nach Anspruch 2, **dadurch gekennzeichnet, dass** der Solarkollektor (3) mit einem im Wesentlichen wendelförmigen Wärmeaustauscher (4) im Inneren des inneren Behälters (11) angeordnet ist.

5. Wärmespeicher (1) nach einem der Ansprüche 1 bis 4, **dadurch gekennzeichnet, dass** der mit Latentwärmespeichermaterialien gefüllte Mantel (2) mit einem paraffinhaltigen Medium, bestehend aus einem Fluid aus Wasser oder Wasserglykol mit mikroverkapseltem Paraffin gefüllt ist.

6. Wärmespeicher (1) nach einem der Ansprüche 1 bis 5, **dadurch gekennzeichnet, dass** der Mantel (2) vertikal unterteilt ist und die verschiedenen Teilstücke (21, 22) mit Latentwärmespeichermaterial mit unterschiedlichen Schmelzpunkten gefüllt sind.

7. Wärmespeicher (1) nach Anspruch 6, **dadurch gekennzeichnet, dass** der Schmelzpunkt der Latentwärmespeichermaterialien der verschiedenen Teilstücke von oben nach unten abnimmt.

8. Wärmespeicher (1) nach einem der Ansprüche 1 bis 7, **dadurch gekennzeichnet, dass** der innere Behälter (11) und der Mantel (2) gemeinsam von einer Wärmedämmung (5) umschlossen werden.

9. Wärmespeicher (1) nach einem der Ansprüche 1 bis 8, **dadurch gekennzeichnet, dass** dem Wärmespeicher (1) eine Vorrichtung zur Nacherhitzung des Heiz- und / oder Brauchwassers nachgeschaltet ist.

10. Wärmespeicher (1) nach einem der Ansprüche 1 bis 9, **dadurch gekennzeichnet, dass** das Latentwärmespeichermaterial sich in mindestens einem Beutel befindet und diese Beutel an der Innen- oder Außenseite des Behälters (11) angeordnet sind.

11. Wärmespeicher (1) nach Anspruch 10, **dadurch gekennzeichnet, dass** sofern die Beutel sich auf der Außenseite des Behälters (11) befinden, sich Wärmeleitpaste zwischen den Beuteln und der Wand des Behälters (11) befindet.

12. Wärmespeicher (1) nach Anspruch 10 oder 11, **dadurch gekennzeichnet, dass** die Beutel aus Kunststoff- oder Metallfolien bestehen.

Fig. 1

Fig. 2

Fig. 3

EP 2 204 618 A2

Fig. 4

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1482254 A1
- DE 29821270 U1